# EUROPEAN PATENT APPLICATION

(11) **EP 4 768 118 A1**
(43) Date of publication of application: **01.07.2026**
(21) Application number: 24856340.5
(22) Date of filing: 09.08.2024
(51) Int. Cl.: B01D 63/02, B01D 53/22

(54) **WATER VAPOR PERMEABLE MEMBRANE MODULE**

(30) Priority: 24.08.2023 JP 2023136424
(71) Applicant: AGC Engineering Co., Ltd., Chiba-shi, Chiba 261-7119 (JP)
(72) Inventor: ONUKI, Shinya, Chiba-shi, Chiba 261-7119 (JP); SUZUKI, Sho, Chiba-shi, Chiba 261-7119 (JP)
(74) Representative: Müller-Boré & Partner Patentanwälte PartG mbB
(86) International application number: PCT/JP2024/028674
(87) International publication number: WO 2025/041649

(57) **Abstract**

The present invention provides a water vapor permeable membrane module with enhanced water vapor permeation performance and durability performance.

The water vapor permeable membrane module of the present invention includes a hollow fiber membrane bundle having a plurality of hollow fiber membranes extending in an axial direction. A cover part having a plurality of filaments braided together is provided to cover each of the plurality of hollow fiber membranes. The filaments are monofilaments.

## Description

### TECHNICAL FIELD

The present invention relates to a water vapor permeable membrane module.

### BACKGROUND ART

A gas separation membrane module is known, in which moisture contained in gas is separated by means of a hollow fiber membrane. The gas separation membrane module includes a hollow fiber bundle having a plurality of hollow fiber membranes bundled together and packed in a tubular casing with end faces of the respective hollow fiber membranes made open and both end portions of the hollow fiber bundle gas-tightly fixed to the casing. The gas separation membrane module, when used for dehumidification purposes, allows wet gas to flow inside the respective hollow fiber membranes and dry purge gas to flow outside the respective hollow fiber membranes within the casing, causing moisture in the wet gas to permeate through the respective hollow fiber membranes. Consequently, the moisture is separated from the wet gas to obtain dry gas. For example, Patent Document 1 discloses a gas separation membrane module in which a hollow fiber bundle having a plurality of hollow fiber membranes bundled together and resinous tube plates are placed in a casing with both end portions of the hollow fiber bundle fixed to the tube plates.

### PRIOR ART DOCUMENTS

### PATENT DOCUMENTS

Patent Document 1: JP-A-2013-86000

### DISCLOSURE OF INVENTION

### TECHNICAL PROBLEM

A gas separation membrane module of the above-described type is likely to have biased arrangement of hollow fiber membranes in the step of fixing the hollow fiber bundle to the tube plates during the gas separation membrane module production process. This leads to narrowed spacing between the hollow fiber membranes or direct contact between the hollow fiber membranes, which restricts the flow of gas between the hollow fiber membranes. Thus, the water vapor permeation performance of the gas separation membrane module may deteriorate due to the difficulty for moisture permeating through the hollow fiber membranes to transfer between gas to be dehumidified and gas to be humidified flowing inside and outside the hollow fiber membranes, respectively. Further, high-pressure compressed gas, when allowed to flow through the hollow fiber membranes, exerts outward pressure on inner circumferential surfaces of the hollow fiber membranes to cause expansion of the hollow fiber membranes. If the hollow fiber membranes expand to an excessively large diameter, the pressure resistance of the hollow fiber membranes decreases so that the durability performance of the water vapor permeable membrane module may deteriorate.

In view of the above circumstances, it is an object of the present invention to provide a water vapor permeable membrane module with enhanced water vapor permeation performance and durability performance.

### SOLUTION TO PROBLEM

The present invention includes the following aspects.
[1] A water vapor permeable membrane module comprising a hollow fiber membrane bundle having: a plurality of hollow fiber membranes extending in an axial direction and covering parts each formed by braiding a plurality of filaments such that the plurality of hollow fiber membranes are covered by the covering parts, respectively, a ratio of an area of a portion of an outer circumferential surface of the hollow fiber membrane covered by the covering part to an area of the outer circumferential surface of the hollow fiber membrane ranging from 5% to 65%.
   The water vapor permeable membrane module of the present invention has each hollow fiber membrane covered by the cover part and thus, when used for dehumidification purposes, enables stable flow of dry purge gas on the outer circumferential surface of each hollow fiber membrane. This allows moisture in wet compressed gas flowing inside each hollow fiber membrane to effectively permeate to the outside of each hollow fiber membrane, thereby enhancing water vapor permeation performance.
[2] The water vapor permeable membrane module according to [1], wherein the filaments are monofilaments.
[3] The water vapor permeable membrane module according to [1] or [2], wherein an outer diameter of the filaments is from 0.01 to 0.25 times an outer diameter of the hollow fiber membrane.
[4] The water vapor permeable membrane module according to any one of [1] to [3], wherein the filaments are made of at least one resin selected from the group consisting of polyphenylene sulfide, polyacrylonitrile, polypropylene, polyvinylidene fluoride, polyarylate, perfluoroalkoxyalkane, polytetrafluoroethylene, polyether ether ketone, polybenzimidazole, polysulfone, polyphenylsulfone, polyethersulfone, polyimide, polyetherimide, polyamide, and polyamide-imide.
[5] The water vapor permeable membrane module according to any one of [1] to [4], comprising: a tubular casing extending in the axial direction and having both axial ends open; and a sealant made of a resin, wherein: the hollow fiber membrane bundle is packed in the casing; and the sealant seals spaces between the plurality of hollow fiber membranes and between the hollow fiber membrane bundle and the casing.
[6] The water vapor permeable membrane module according to [5], which is configured to allow purge gas to flow inside the casing, wherein the purge gas is a part of gas discharged from the hollow fiber membrane bundle.

### ADVANTAGEOUS EFFECTS OF INVENTION

According to the present invention, it is possible to provide a water vapor permeable membrane module with enhanced water vapor permeation performance and durability performance.

### BRIEF DESCRIPTION OF DRAWINGS

Fig. 1 is a cross-sectional view of a water vapor permeable membrane module according to an embodiment of the present invention, as taken along an axial direction.
Fig. 2 is a schematic view of the water vapor permeable membrane module according to the embodiment of the present invention, as viewed from the upstream side.
Fig. 3 is an external view of a hollow fiber membrane with a covering part according to an embodiment of the present invention.
Fig. 4 is a first cross-sectional view illustrating a sealant forming process during production of the water vapor permeable membrane module according to the embodiment of the present invention.
Fig. 5 is a second cross-sectional view illustrating the sealant forming process during production of the water vapor permeable membrane module according to the embodiment of the present invention.
Fig. 6 is a third cross-sectional view illustrating the sealant forming process during production of the water vapor permeable membrane module according to the embodiment of the present invention.

### DESCRIPTION OF EMBODIMENTS

The following terms as used in the present specification and claims have the following meanings.

A numerical range expressed using the term "to" means a range including numerical values described before and after the term "to" as the lower and upper limits.

The term "packing rate of hollow fiber membranes relative to a casing" means, when the casing is cut in a direction perpendicular to an axial direction, the ratio of the sum of cross-sectional areas defined by outer edges of the hollow fiber membranes to a cross-sectional area of the inside of the casing.

The term "effective length of a casing" corresponds to a length of hollow fiber membranes in the casing that contribute separation of water vapor and typically means a length between sealants in the casing.

The term "coverage rate" means the ratio of an area of a portion of a hollow fiber membrane covered by a covering part to an area of the outer circumferential surface of the hollow fiber membrane.

The water vapor permeable membrane module of the present invention is configured to allow gas to be dehumidified and gas to be humidified to flow inside and outside the hollow fiber membranes, respectively, and cause moisture permeating through the hollow fiber membranes to transfer between the gas to be dehumidified and the gas to be humidified. Hereinafter, an example of the water vapor permeable membrane module of the present invention will be described below with reference to the drawings. It should be noted that the dimensions etc. of the figures illustrated in the following description are merely exemplary, the present invention is not necessarily limited to such illustrations, and appropriate changes and modifications are possible within the range that does not depart from the scope of the present invention.

Here, an arrow Df is shown in each figure as needed. The arrow Df indicates the direction of compressed gas flow in the water vapor permeable membrane module. In the following description, the side (+Df side) toward which the arrow Df points in the direction of compressed gas flow is referred to as the "downstream side"; and the side (-Df side) opposite the side toward which the arrow Df points in the direction of compressed gas flow is referred to as the "upstream side".

A water vapor permeable membrane module 10 of the present embodiment is configured as a dehumidification device to dehumidify compressed gas PA1 and discharge the resulting dry compressed gas PA2. The compressed gas PA2 discharged from the water vapor permeable membrane module 10 is fed to any equipment (not shown). The compressed gas PA2 is used to actuate the equipment itself or a part of the equipment. The equipment can be, for example, a pantograph for robots and trains etc. having a movable part actuatable by the compressed gas PA2. As will be described later, the water vapor permeable membrane module 10 of the present embodiment is also usable as a humidification device to humidify compressed gas PA1 and discharge the resulting wet compressed gas PA2.

For example, in the case where the compressed gas PA1 is generated by compressing ambient air Am at a temperature of 20°C and a relative humidity of 25% under atmospheric pressure (0.1 MPaA) to 0.8 MPaA, the relative humidity of the compressed gas PA1 at 20°C becomes 100%. Thus, the compressed gas PA1 is prone to condensation.

If such compressed gas PA1 is fed to the equipment (not shown) without any dehumidification, moisture in the compressed gas PA1 is likely to condense due to a temperature decrease in the equipment or the like. Consequently, drainage is likely to occur in the equipment. The occurrence of drainage in the equipment raises the problem of rusting of constituent members etc. of the equipment. For this reason, the water vapor permeable membrane module 10 of the present embodiment dehumidifiers the compressed gas PA1 and feeds the resulting dry compressed gas PA2 to the equipment.

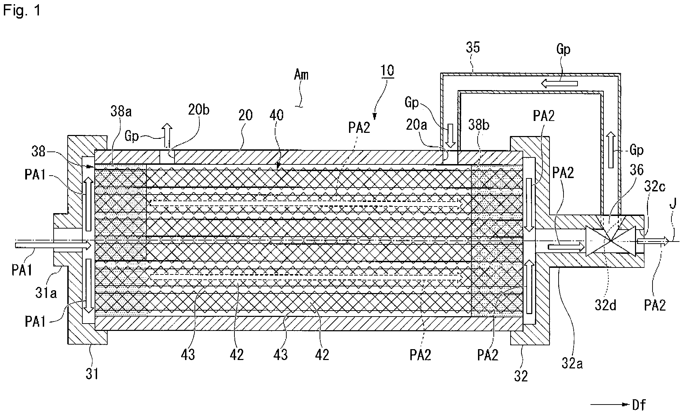

As described above, the water vapor permeable membrane module 10 dehumidifies the compressed gas PA1 and discharges the resulting dry compressed gas PA2. As shown in Fig. 1, the water vapor permeable membrane module 10 includes a casing 20, a first flange 31, a second flange 32, a hollow fiber membrane bundle 40, a sealant 38 and a branch pipe 35.

A center axis J shown in Fig. 1 is an imaginary axial line indicating a center axis of the casing 20. In the present embodiment, the center axis J is in parallel with the direction Df of compressed gas flow. Hereinafter, the direction of extension of the center axis J is also referred to as "axial".

The casing 20 has a tubular shape extending in the axial direction, with both axial ends thereof open. In the present embodiment, the casing 20 has a circular tubular shape. The hollow fiber membrane bundle 40 and the sealant 38 are placed in the casing 20. An inlet port 20a is provided in a downstream side (+Df side) portion of the casing 20. An outlet port 20b is provided in an upstream side (-Df side) portion of the casing 20. Each of the inlet port 20a and the outlet port 20b allows communication between the inside of the casing 20 and the outside of the casing 20.

The material of the casing 20 is not particularly limited, and may be a metal material such as aluminum or stainless steel or a resin material such as an acrylic resin or a polycarbonate resin. The shape of the casing 20 is not limited to a circular cylindrical shape and may be any other shape such as a square tubular shape or a hexagonal tubular shape. The axial length of the casing 20 is not particularly limited, and can set such that the effective length ranges from 10 mm to 1000 mm. The outer diameter of the casing 20 is preferably from 4 mm to 225 mm. The inner diameter of the casing 20 is preferably from 2 mm to 220 mm.

The first flange 31 is attached to an upstream side (-Df side) end portion of the casing 20. Although not specifically shown in the drawings, a gasket is interposed between the first flange 31 and the casing 20 so that the first flange 31 is gas-tightly fixed to the casing 20. The first flange 31 has a supply portion 31a. A through hole is formed in the supply portion 31a to pass through the supply portion 31a in the axial direction. The compressed gas PA1 flows into the inside space of the first flange 31 through this through hole.

The second flange 32 is attached to a downstream side (+Df side) end portion of the casing 20. Although not specifically shown in the drawings, a gasket is interposed between the second flange 32 and the casing 20 so that the second flange 32 is gas-tightly fixed to the casing 20. The second flange 32 has a discharge portion 32a. A through hole 32c and a branch hole 32d are formed in the discharge portion 32a. The through hole 32c is a hole passing through the discharge portion 32a in the axial direction. The compressed gas PA2, which has been dehumidified by the hollow fiber membrane bundle 40, is discharged through the through hole 32c and fed to the equipment (not shown).

The branch hole 32d is a hole extending through the discharge portion 32a in a direction substantially perpendicular to the axial direction. One end of the branch hole 32d is connected to an inner circumferential surface of the through hole 32c, whereas the other end of the branch hole 32d is connected to an outer circumferential surface of the discharge portion 32a. The inside of the branch hole 32d communicates with the inside of the through hole 32c.

The materials of the first flange 31 and the second flange 32 are not particularly limited, and can be an acrylic resin, polycarbonate, polysulfone, polyolefin, polyvinyl chloride or other resin. Each of the materials of the first flange 31 and the second flange 32 may be one type or a combination of two or more types. The first flange 31 and the second flange 32 may alternatively be made of a metal material such as aluminum.

The hollow fiber membrane bundle 40 has a plurality of hollow fiber membranes 42 extending in the axial direction. In the present embodiment, the hollow fiber membrane bundle 40 also has a plurality of covering parts 43. The hollow fiber membrane bundle 40 extends from the upstream side (-Df side) end portion to the downstream side (+Df side) end portion of the casing 20. The hollow fiber membrane bundle 40 is packed in the casing 20. In the casing 20, both end portions of the hollow fiber membrane bundle 40 are gas-tightly fixed to an inner circumferential surface of the casing 20 by the sealant 38.

End faces of each hollow fiber membrane 42 are open in the upstream side (-Df side) end portion and the downstream side (+Df side) end portion of the casing 20. This allows the inside of each hollow fiber membrane 42 to communicate with the inside spaces of the first and second flanges 31 and 32. Thus, the compressed gas PA1 is supplied from the supply portion 31a through the inside space of the first flange 31 to each hollow fiber membrane 42 and flows through the inside of each hollow fiber membrane 42 toward the downstream side while being dehumidified. The dehumidified compressed gas PA2 is discharged through the inside space of the second flange 32 and the through hole 32c of the discharge portion 32a.

The shape of the hollow fiber membranes 42 is not particularly limited, and is typically a circular cylindrical shape. The outer diameter of the hollow fiber membranes 42 is preferably from 0.2 mm to 6.0 mm, more preferably from 0.4 mm to 2.0 mm. The inner diameter of the hollow fiber membranes 42 is preferably from 0.1 mm to 5.5 mm, more preferably from 0.5 mm to 1.5 mm. The membrane thickness of the hollow fiber membranes 42 is preferably from 0.05 mm to 1.5 mm. The packing rate of the hollow fiber membranes 42 relative to the casing 20 is preferably from 1% to 70%, more preferably 50% or lower. The number of hollow fiber membranes 42 constituting the hollow fiber membrane bundle 40 is preferably from 1 to 100000.

The material of the hollow fiber membranes 42 is not particularly limited. Examples of the material of the hollow fiber membranes 42 include polysulfone, polyethersulfone, polyimide, polyetherimide, silicone, cellulose acetate, a fluorinated ion exchange resin, polyvinylidene fluoride and polytetrafluoroethylene. Among others, polysulfone, polyethersulfone, polyimide, polyetherimide and a fluorinated ion exchange resin are preferred because of high water vapor permeability. The material of the hollow fiber membranes 42 may be one type or a combination of two or more types.

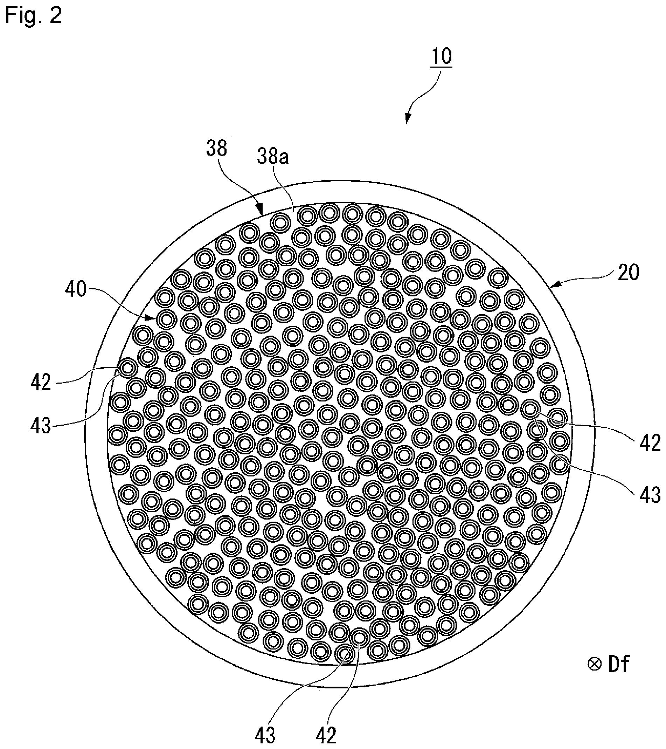

As shown in Fig. 1, each of the plurality of hollow fiber membranes 42 is covered by the covering part 43. Each covering part 43 has a substantially circular cylindrical shape extending in the axial direction. The covering parts 43 cover outer sides of the hollow fiber membranes 42, respectively. The position of an upstream side (-Df side) end of the covering part 43 is substantially the same as that of the upstream side end of the hollow fiber membrane 42. The position of a downstream side (+Df side) end of the covering part 43 is substantially the same as that of the downstream side end of the hollow fiber membrane 42. The axial length of the covering part 43 is substantially the same as the axial length of the hollow fiber membrane 42. At least a portion of an inner circumferential surface of each covering part 43 is in contact with an outer circumferential surface of the hollow fiber membrane 42. The entire inner circumferential surface of each covering part 43 may be in contact with the outer circumferential surface of the hollow fiber membrane 42. As shown in Fig. 2, at least some of the plurality of covering parts 43 are in contact with the other covering parts 43. Since each of the hollow fiber membranes 42 is covered by the covering part 43 in the present embodiment, the hollow fiber membranes 42 can be kept from contact with each other.

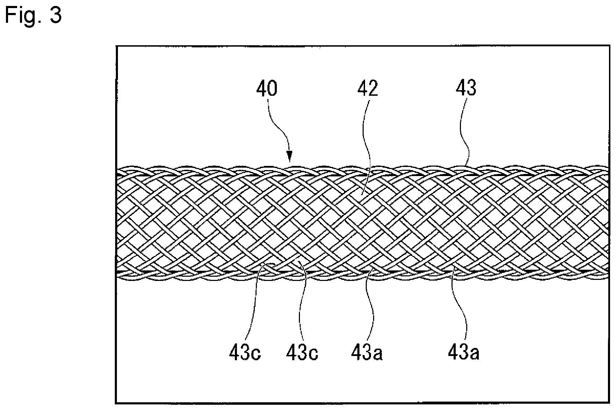

As shown in Fig. 3, the covering part 43 has a plurality of filaments 43a braided together. In the present embodiment, the expression "braid" means to interlacing or weaving a plurality of filaments 43a. The plurality of filaments 43a are braided together to constitute the covering part 43. In the present embodiment, the covering part 43 is composed of twenty-four filaments 43a. The number of filaments 43a constituting the covering part 43 may be 23 or less or may be 25 or more. In the present embodiment, twelve filaments 43a extend in a direction inclined from the axial direction toward one side of the circumferential direction of the hollow fiber membrane 42; and the other twelve filaments 43a extend in a direction inclined from the axial direction toward the other side of the circumferential direction of the hollow fiber membrane 42.

In the present embodiment, the filaments 43a extending in the direction inclined from the axial direction toward one side of the circumferential direction of the hollow fiber membrane 42 are axially spaced apart from each other. Similarly, the filaments 43a extending in the direction inclined from the axial direction toward the other side of the circumferential direction of the hollow fiber membrane 42 are axially spaced apart from each other. There are thus openings 43c formed between the filaments 43a. In the present embodiment, each of the openings 43c has a substantially rhombus shape when viewed from outside the covering part 43. The inside of the covering part 43 and the outside of the covering part 43 communicate with each other via the openings 43c. Hence, a portion of the outer circumferential surface of the hollow fiber membrane 42 is exposed outside the covering part 43 via the openings 43c. In the present embodiment, the coverage rate is preferably in the range of from 5% to 65%. Gas outside the covering part 43 can flow into the inside of the covering part 43 through the openings 43c and come into contact with the outer circumferential surface of the hollow fiber membrane 42. Furthermore, gas inside the covering part 43 can flow to the outside of the covering part 43 through the openings 43c. These flows allow circulation of the gas around the hollow fiber membrane 42. In the present embodiment, the coverage rate is determined, by capturing an image of the appearance of the hollow fiber membrane 42 covered by the covering part 43 and performing image processing on the captured image, as the ratio of the area of the covering part 43 to the sum of the area of the portion of the hollow fiber membrane 42 exposed outside the covering part 43 via the opening 43c and the area of the covering part 43.

In the present embodiment, the filament 43a is a monofilament consisting of a single fiber. The filament 43a may be a multifilament consisting of multiple fibers. Since the filament 43a is a monofilament in the present embodiment, the outer diameter of the filament 43a is the same as the outer diameter of the single fiber. In the present embodiment, the outer diameter of the filaments 43a is preferably in the range from 0.01 to 0.25 times the outer diameter of the hollow fiber membrane 42.

In the present embodiment, the filament 43a is made of a resin material. The material of the filaments 43a is not particularly limited, but is preferably at least one resin selected from the group consisting of polyphenylene sulfide, polyacrylonitrile, polypropylene, polyvinylidene fluoride, polyarylate, perfluoroalkoxyalkane, polytetrafluoroethylene, polyether ether ketone, polybenzimidazole, polysulfone, polyphenylsulfone, polyethersulfone, polyimide, polyetherimide, polyamide and polyamide-imide.

As shown in Fig. 1, the sealant 38 holds both axial end portions of the hollow fiber membrane bundle 40. The sealant 38 is fixed by adhesion to the inner circumferential surface of the casing 20. In the present embodiment, the sealant 38 is made of a resin. The material of the sealant 38 is not particularly limited. Examples of the material of the sealant 38 include an epoxy resin, a polyurethane resin, a silicone resin and an acrylic resin. Among others, an epoxy resin and a polyurethane resin are preferred as the material of the sealant 38 in view of adhesive durability and formability. The material of the sealant 38 may be one type or a combination of two or more types. In the present embodiment, the sealant 38 is provided as two pieces. The sealant 38 includes a first sealant 38a and a second sealant 38b.

The first sealant 38a is disposed inside the casing 20. The first sealant 38a is positioned between the upstream side (-Df side) end portion of the casing 20 and the outlet port 20b in the axial direction. The first sealant 38a is fixed by adhesion to the inner circumferential surface of the casing 20. The first sealant 38a holds the upstream side end portion of the hollow fiber membrane bundle 40. As shown in Fig. 2, the first sealant 38a seals the spaces between the plurality of hollow fiber membranes 42 and between the hollow fiber membrane bundle 40 and the casing 20. As shown in Fig. 1, the space inside the first flange 31 and the space inside the casing 20 are gas-tightly sealed from each other by the first sealant 38a.

The second sealant 38b is disposed inside the casing 20. The second sealant 38b is positioned between the downstream side (+Df side) end portion of the casing 20 and the inlet port 20a in the axial direction. The second sealant 38b is fixed by adhesion to the inner circumferential surface of the casing 20. The second sealant 38b holds the downstream side end portion of the hollow fiber membrane bundle 40. Although not shown in the drawings, the second sealant 38b seals the spaces between the plurality of hollow fiber membranes 42 and between the hollow fiber membrane bundle 40 and the casing 20 as in the case of the first sealant 38a. The space inside the second flange 32 and the space inside the casing 20 are gas-tightly sealed from each other by the second sealant 38b.

Each of the axial dimension of the first sealant 38a and the axial dimension of the second sealant 38b is preferably 5 mm or larger. When the axial dimensions of the first and second sealants 38a and 38b are in such a range, the adhesion between the first and second sealants 38a and 38b and the casing 20 can be enhanced.

The branch pipe 35 is a gas passage connecting the branch hole 32d of the discharge portion 32a to the inlet port 20a of the casing 20. One end of the branch pipe 35 is connected to the branch hole 32d, whereas the other end of the branch pipe 35 is connected to the inlet port 20a. By such pipe connection, the inside of the through hole 32c of the discharge portion 32a communicates with the inside of the casing 20 via the branch pipe 35.

The discharge portion 32a is equipped with a switching section 36. In the present embodiment, the switching section 36 is a three-way valve. The switching section 36 is capable of switching the flow rate ratio, that is, the ratio of the flow rate of the compressed gas PA2 fed through the branch pipe 35 to the flow rate of the compressed gas PA2 discharged from the through hole 32c. The switching section 36 is in the form of a mixing valve in the present embodiment. In the present embodiment, the flow rate ratio is preferably in the range of from 10% to 50%.

The compressed gas PA2 fed through the branch pipe 35 flows into the casing 20 via the inlet port 20a. In the present embodiment, the compressed gas PA2 flowing into the casing 20 serves as purge gas Gp to discharge moisture in the compressed gas PA1 flowing inside the respective hollow fiber membranes 42 to the outside of the water vapor permeable membrane module 10. In the following description, the compressed gas PA2 flowing inside the branch pipe 35 and the casing 20 is referred to as purge gas Gp. The purge gas Gp is a part of the compressed gas PA2 discharged from the hollow fiber membrane bundle 40. In other words, a part of the compressed gas PA2 that has been dehumidified by the water vapor permeable membrane module 10 is used as the purge gas Gp. The water vapor pressure of the purge gas Gp is hence lower than the water vapor pressure of the compressed gas PA1 flowing inside the hollow fiber membranes 42. The purge gas Gp flows toward the upstream side (-Df side) within the casing 20. The purge gas Gp flows toward the upstream side between the hollow fiber membranes 42 while coming into contact with the respective hollow fiber membranes 42 via the openings 43c of the covering parts 43. The purge gas Gp is discharged to the outside of the casing 20 via the outlet port 20b of the casing 20. Here, the purge gas Gp may not be a part of the compressed gas PA2, and may be generated by a purge gas feeding device (not shown) and fed into the casing 20.

Next, the operations of the water vapor permeable membrane module 10 of the present embodiment for dehumidifying the wet compressed gas PA1 and discharging the dry compressed gas PA2 will be described below. The compressed gas PA1, when supplied from through the supply portion 31a of the first flange 31, flows toward the downstream side (+Df side) inside the respective hollow fiber membranes 42. On the other hand, the purge gas Gp flows into the casing 20 through the inlet port 20a of the casing 20 and flows between the respective hollow fiber membranes 42 from the downstream side toward the upstream side (-Df side). As described above, the purge gas Gp flows toward the upstream side while coming into contact with the respective hollow fiber membranes 42 via the openings 43c of the covering parts 43. Furthermore, the water vapor pressure of the purge gas Gp is lower than the water vapor pressure of the compressed gas PA1 flowing inside the respective hollow fiber membranes 42 as described above. Accordingly, moisture in the compressed gas PA1 flowing inside the respective hollow fiber membranes 42 permeates out of the respective hollow fiber membranes 42 and is discharged by the purge gas Gp to the outside of the water vapor permeable membrane module 10 through the outlet port 20b. This allows removal of moisture from the compressed gas PA1 flowing inside the respective hollow fiber membranes 42 to dehumidify the compressed gas PA1. Therefore, the water vapor permeable membrane module 10 yields the compressed gas PA2 lower in water vapor pressure than the compressed gas PA1. The compressed gas PA2 flows out of the respective hollow fiber membranes 42 into the inside space of the second flange 32. A part of the compressed gas PA2 is discharged to the outside through the through hole 32c; and another part of the compressed gas PA2 is fed as the purge gas Gp into the casing 20.

As described above, the water vapor permeable membrane module 10 of the present embodiment is also usable as a humidification device to humidify dry compressed gas PA1 and discharge the resulting wet compressed gas PA2. The operations of the water vapor permeable membrane module for humidifying the dry compressed gas PA1 and discharging the wet compressed gas PA2 will be described below. The dry compressed gas PA1, when supplied from through the supply portion 31a of the first flange 31, flows toward the downstream side (+Df side) inside the respective hollow fiber membranes 42. On the other hand, the wet purge gas Gp flows into the casing 20 through the inlet port 20a of the casing 20 and flows between the respective hollow fiber membranes 42 from the downstream side toward the upstream side (-Df side). The wet purge gas Gp is generated by a purge gas feeding device (not shown) and fed into the casing 20. In place of the purge gas Gp, a liquid such as water may be fed into the casing 20. The water vapor pressure of the purge gas Gp is higher than the water vapor pressure of the compressed gas PA1 flowing inside the hollow fiber membranes 42. Accordingly, moisture in the purge gas Gp flowing inside the casing 20 permeates into the respective hollow fiber membranes 42 and transfers into the compressed gas PA1 flowing inside the respective hollow fiber membranes 42. This allows humidification of the compressed gas PA1 flowing inside the respective hollow fiber membranes 42. Therefore, the water vapor permeable membrane module 10 yields the wet compressed gas PA2 higher in water vapor pressure than the compressed gas PA1. The compressed gas PA2 flows out of the respective hollow fiber membranes 42 into the inside space of the second flange 32. A part of the compressed gas PA2 is discharged to the outside through the through hole 32c.

A sealant forming process Ps of forming the sealant 38 will be next described below. The sealant forming process Ps is a part of the process of producing the water vapor permeable membrane module 10. The sealant forming process Ps includes an application step P01, an injection step P02, a curing step P03 and a cutting step P04. In the present specification, the expression "worker etc." includes a worker and/or an assembling device that performs each work. Each work may be done only by a worker, only by an assembling device or by both of a worker and an assembling device.

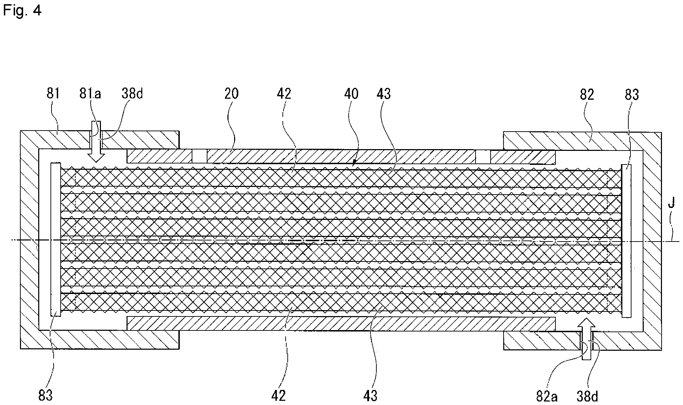

The application step P01 is a step of placing the hollow fiber membrane bundle 40 in the casing 20, with a filler 83 applied to both ends of the hollow fiber membrane bundle 40, as shown in Fig. 4. In the application step P01, a worker etc. first applies the filler 83 to both ends of the hollow fiber membrane bundle 40. The worker etc. also performs a filling treatment on the respective hollow fiber membranes 42 by injecting a part of the filler 83 into both end portions of the respective hollow fiber membranes 42. This makes it possible to, when a liquid sealant 38d is injected into the casing 20 in the injection step P02, prevent the entry of the liquid sealant 38d into the hollow fiber membranes 42. In the present embodiment, the material of the filler 83 is, for example, a silicone resin. The filler 83 is however not limited to this resin.

The worker etc. next places the hollow fiber membrane bundle 40 in the casing 20. Here, the axial length of the hollow fiber membrane bundle 40 is larger than the axial length of the casing 20, and both end portions of the hollow fiber membrane bundle 40 project from both sides of the casing 20 in the axial direction. As described above, the hollow fiber membranes 42 are respectively covered by the covering parts 43 so that the hollow fiber membranes 42 are arranged apart from each other. It is thus possible to prevent direct contact between the hollow fiber membranes 42. Since the hollow fiber membranes 42 are respectively covered by the covering parts 43, it is possible to easily prevent the hollow fiber membranes 42 from being arranged biasedly in the casing 20 when viewed from the upstream side (-Df side) and the downstream side (+Df side). Hence, the hollow fiber membranes 42 are evenly arranged apart from each other. The application step P01 ends upon placement of the hollow fiber membrane bundle 40 in the casing 20.

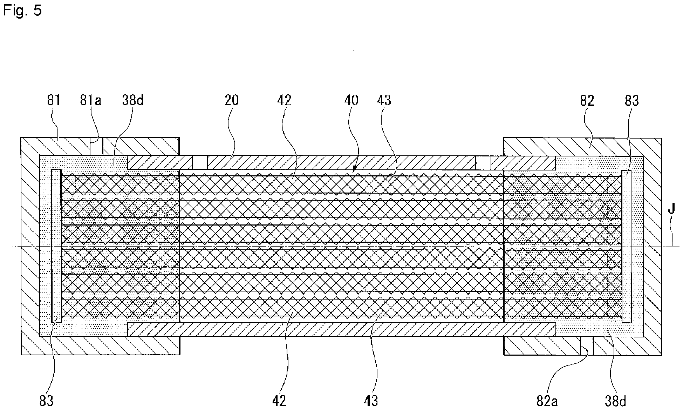

The injection step P02 is a step of injecting a liquid sealant 38d into the casing 20. In the injection step P02, a worker etc. first attaches first and second lid members 81 and 82 to the upstream side (-Df side) and downstream side (+Df side) end portions of the casing 20, respectively. The worker etc. next injects a predetermined amount of liquid sealant 38d from through injection ports 81a and 82a of the first and second lid members 81 and 82 while allowing the casing 20 in which the hollow fiber membrane bundle 40 has been placed to rotate circumferentially of the casing 20 and thereby imparting a centrifugal force to the casing 20. By this operation, a part of the liquid sealant 38d is injected into the casing 20 as shown in Fig. 5. Within the casing 20, the liquid sealant 38d comes into contact with the inner circumferential surface of the casing 20, the respective covering parts 43 and the respective hollow fiber membranes 42. The injection step P02 ends upon completion of the injection of the liquid sealant material 38d.

In the curing step P03, a worker etc. causes curing of the liquid sealant 38d. The cured sealant 38d is fixed to the casing 20. Further, the respective hollow fiber membranes 42 are fixed in position to each other by the cured sealant 38d. Hence, the hollow fiber membrane bundle 40 is fixed to the casing 20 by the cured sealant 38d. The curing step P03 ends upon completion of the curing of the liquid sealant 38d.

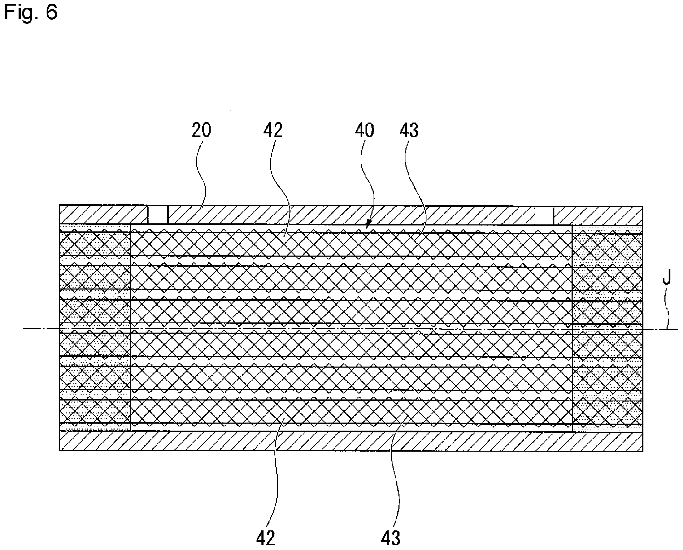

The cutting step P04 is a step of adjusting the shapes of the first sealant 38a, the second sealant 38b and the hollow fiber membrane bundle 40. In the cutting step P04, a worker etc. first detaches the first and second lid members 81 and 82 from the casing 20. Next, the worker etc. cuts away the portions of the cured sealant 38d and the hollow fiber membrane bundle 40 projecting from both sides of the casing 20 in the axial direction. By this cutting operation, the hollow fiber membrane bundle 40 and the first and second sealants 38a and 38b are shaped in appropriate form as shown in Fig. 6. Since the both end portions of the respective hollow fiber membranes 42 into which the filler 83 has been applied or injected are cut away in this cutting step, the respective hollow fiber membranes 42 have both end faces open. The sealant forming process Ps is finished when the cutting step P04 ends. The sealant forming process Ps is not limited to the above process so far as each of the first and second sealants 38a and 38b can be shaped in appropriate form and be fixed to the casing 20.

In the present embodiment, the water vapor permeable membrane module 10 includes: the hollow fiber membrane bundle 40 having the plurality of hollow fiber membranes 42 extending in the axial direction; and the covering parts 43 each formed by braiding the plurality of filaments 43a such that the plurality of hollow fiber membranes 42 are covered by the covering parts 43, respectively. Since the hollow fiber membranes 42 are respectively covered by the covering parts 43, the hollow fiber membranes 42 are arranged apart from each other. This prevents direct contact between the hollow fiber membranes 42 and allows the hollow fiber membranes 42 to be evenly arranged in the casing 20 when viewed from the upstream side (-Df side) and the downstream side (+Df side). Since the covering part 43 has the plurality of filaments 43a braided together, the purge gas Gp can flow around each hollow fiber membrane 42 through the openings 43c between the plurality of filaments 43a. This enables stable flow of the dry purge gas Gp on the outer circumferential surface of each hollow fiber membrane 42, which leads to an increased amount of moisture permeating from the wet compressed gas PA1 flowing in each hollow fiber membrane 42 to the outside of each hollow fiber membrane 42. Therefore, the water vapor permeable membrane module 10 achieves enhanced water vapor permeation performance.

Since each of the hollow fiber membranes 42 is covered by the covering part 43 in the present embodiment, expansion of each hollow fiber membrane 42 is suppressed by the covering part 43 even when outward pressure is applied to the inner circumferential surface of each hollow fiber membrane 42 during the flow of the compressed gas PA1 through each hollow fiber membrane 42. This prevents the diameter of each hollow fiber membrane 42 from becoming excessively large and suppresses deterioration of the pressure resistance of each hollow fiber membrane 42. The durability performance of the water vapor permeable membrane module 10 can be thus enhanced whereby it is possible to more stably enhance the water vapor permeation performance of the water vapor permeable membrane module 10.

In the present embodiment, the hollow fiber membranes 42 are prevented by the covering parts 43 from direct contact with each other and thus are prevented from rubbing against each other. This suppresses damage of the hollow fiber membranes 42, to further enhance the durability performance of the water vapor permeable membrane module 10. It is thus more stably enhance the water vapor permeation performance of the water vapor permeable membrane module 10.

In the present embodiment, the filaments 43a are monofilaments. In the case where each of the filaments 43a constituting the covering part 43 is a multifilament, each filament is deformed into a flattened shape to spread circumferentially and axially of the hollow fiber membrane 42 during braiding of the filaments. When each filament is flattened in shape to spread circumferentially and axially of the hollow fiber membrane 42, the areas of the openings 43c in each covering part 43 decrease to cause an increase of the coverage rate. As a result, the effective membrane surface area of each hollow fiber membrane 42 decreases so that it becomes difficult for the dry purge gas Gp to stably flow on the outer circumferential surface of each hollow fiber membrane 42. This can result in a deterioration of the water vapor permeation performance of the water vapor permeable membrane module 10. In the present embodiment, by contrast, each filament 43a is a monofilament so that, during braiding of the filaments, each filament 43a is prevented from being deformed into a flattened shape to spread circumferentially and axially. It is thus possible to suppress an increase of the coverage rate and thereby stably enhance the water vapor permeation performance of the water vapor permeable membrane module 10.

In the present embodiment, the coverage rate, that is, the ratio of the area of the portion of the outer circumferential surface of the hollow fiber membrane 42 covered by the covering part to the area of the outer circumferential surface of the hollow fiber membrane 42 is in the range of from 5% to 65%. Since the coverage rate is prevented from being too high, the effective flow rate of the purge gas Gp on the outer circumferential surface of each hollow fiber membrane 42 can be prevented from becoming excessively low due to a decrease of the effective membrane surface area of each hollow fiber membrane. This leads to an increased amount of moisture permeating from the compressed gas PA1 to the outside of each hollow fiber membrane 42, thereby stably increasing the amount of moisture discharged to the outside of the water vapor permeable membrane module 10 by the purge gas Gp. It is thus possible to more effectively enhance the water vapor permeation performance of the water vapor permeable membrane module 10.

Since the coverage rate is prevented from being too low in the present embodiment, the area of the openings 43c can be prevented from being too large. This suppresses an excessive decrease of the strength of the covering part 43 so that the diameter of each hollow fiber membrane 42 can be more effectively prevented by the covering part 43 from becoming excessively large during the flow of the compressed gas PA1 through each hollow fiber membrane 42. It is thus possible to enhance the durability performance of the water vapor permeable membrane module 10 and thereby possible to more stably enhance the water vapor permeation performance of the water vapor permeable membrane module 10.

Furthermore, since the coverage rate is prevented from being too low in the present embodiment, the hollow fiber membranes 42 can be more effectively prevented from rubbing against each other. It is thus possible to further enhance the durability performance of the water vapor permeable module 10 and thereby possible to more stably enhance the water vapor permeation performance of the water vapor permeable membrane module 10.

In the present embodiment, the outer diameter of the filaments 43a is in the range of from 0.01 to 0.25 times the outer diameter of the hollow fiber membrane 42. The outer diameter of the filaments 43a is prevented from being too large, thereby preventing an excessive increase of the coverage ratio. This prevents an excessive decrease of the effective membrane surface area of the outer circumferential surface of each hollow fiber membrane 42 so that the flow rate of the purge gas Gp flowing on the outer circumferential surface of each hollow fiber membrane 42 for effective use in water vapor permeation can be prevented from becoming excessively low. It is thus possible to more effectively enhance the water vapor permeation performance of the water vapor permeable membrane module 10.

In the present embodiment, the outer diameter of the filaments 43a is also prevented from being too small. This suppresses an excessive decrease of the strength of the filaments 43a, that is, suppresses an excessive decrease of the strength of the covering part 43. As a consequence, the diameter of each hollow fiber membrane 42 can be more effectively prevented from becoming excessively large during the flow of the compressed gas PA1 through each hollow fiber membrane 42. It is thus possible to more effectively enhance the durability performance of the water vapor permeable membrane module 10 and thereby possible to more stably enhance the water vapor permeation performance of the water vapor permeable membrane module 10.

In the present embodiment, the filaments 43a are made of at least one resin selected from the group consisting of polyphenylene sulfide, polyacrylonitrile, polypropylene, polyvinylidene fluoride, polyarylate, perfluoroalkoxyalkane, polytetrafluoroethylene, polyether ether ketone, polybenzimidazole, polysulfone, polyphenylsulfone, polyethersulfone, polyimide, polyetherimide, polyamide and polyamide-imide. Accordingly, the filaments 43a can achieve higher heat resistance and strength as compared to the case where a polyester is used as the material of the filaments 43a. This suppresses thermal deformation and pressure resistance deterioration of the covering parts 43 during use of the water vapor permeable membrane module 10, thereby more effectively enhancing the durability performance of the water vapor permeable membrane module 10. It is thus possible to more stably enhance the water vapor permeation performance of the water vapor permeable membrane module 10.

In the present embodiment, the purge gas Gp, which flows inside the casing 20, is a part of the gas discharged from the hollow fiber membrane bundle 40. Since a part of the dry compressed gas PA2 discharged from the hollow fiber membrane bundle 40 is used as the purge gas Gp, it is possible to simplify the configuration for generating the dry compressed gas PA2 as compared to the case where a purge gas feeding device is separately provided to feed purge gas Gp into the casing 20.

Moreover, the compressed gas PA2 dehumidified by the water vapor permeable membrane module 10 is fed to the above-mentioned equipment (not shown) in the present embodiment. In this configuration, moisture in the compressed gas PA2 can be prevented from being condensed due to a temperature decrease in the equipment or the like, and thus, rusting of constituent members etc. of the equipment can be prevented. It is therefore possible to achieve stable operations of the equipment.

### EXAMPLES

In the following, the present invention will be described in further detail by way of Examples of the present embodiment. It should however be understood that the present invention is by no means restricted to the following description. Table 1 shows Ex. 1 corresponding to Working Example and Ex. 2 and 3 corresponding to Comparative Examples. Table 2 shows Ex. 4 to 8 corresponding to Working Examples and Ex. 9 to 11 corresponding to Comparative Examples. Table 3 shows Ex. 12 corresponding to Comparative Example. Table 4 shows Ex. 13 to 15 corresponding to Working Examples and Ex. 16 corresponding to Comparative Example. Here, the outer diameter of a monofilament, which consists of a single fiber, is the same as the outer diameter of the fiber; and the outer diameter of a multifilament, which consists of multiple fibers, is larger than the outer diameter of the fibers.

### [Ex. 1]

A water vapor permeable membrane module of the type illustrated in Figs. 1 and 2 was produced.

The casing used was a circular cylindrical member made of an acrylic resin with an outer diameter of 55 mm, an inner diameter of 50 mm and a length of 250 mm.

The hollow fiber membranes used were hollow fiber membranes made of a fluorine resin with an outer diameter of 1.0 mm and an inner diameter of 0.78 mm (SUNSEP membranes manufactured by AGC ENGINEERING CO., LTD.). The number of hollow fiber membranes used was 500.

The covering parts used were those formed by braiding monofilaments each made of a polyphenylene sulfide resin with a filament diameter of 0.10 mm. The coverage rate was set to 45%.

As the material of the sealant, an epoxy resin was used. The sealant was formed by the above-described sealant forming process.

Both end portions of the hollow fiber membrane bundle were fixed to the casing by the sealant so that the effective length of the casing was set to 190 mm.

### [Ex. 2]

Covering parts formed by braiding multifilaments, each consisting of 50 fibers with a fiber diameter of 0.06 mm, were used. The coverage rate was set to 100%.

A water vapor permeable membrane module was produced in the same manner as in Ex. 1, except for the covering parts.

### [Ex. 3]

A water vapor permeable membrane module was produced in the same manner as in Ex. 1, except that the hollow fiber membranes were covered by no covering parts.

### [Ex. 4]

Used was a hollow fiber membrane made of a fluorine resin with an outer diameter of 1.0 mm and an inner diameter of 0.78 mm (SUNSEP membranes manufactured by AGC ENGINEERING CO., LTD.). Here, only one hollow fiber membrane was used.

Covering parts formed by braiding monofilaments, each with a filament diameter of 0.06 mm, were used. The coverage rate was set to 35%.

A water vapor permeable membrane module was produced in the same manner as in Ex. 1, except for the number of hollow fiber membranes used and the covering parts.

### [Ex. 5]

A water vapor permeable membrane module was produced in the same manner as in Ex. 4, except that: the filament diameter was 0.08 mm; and the coverage rate was set to 40%.

### [Ex. 6]

A water vapor permeable membrane module was produced in the same manner as in Ex. 4, except that: the filament diameter was 0.10 mm; and the coverage rate was set to 45%.

### [Ex. 7]

A water vapor permeable membrane module was produced in the same manner as in Ex. 4, except that: the filament diameter was 0.17 mm; and the coverage rate was set to 55%.

### [Ex. 8]

A water vapor permeable membrane module was produced in the same manner as in Ex. 4, except that: the filament diameter was 0.25 mm; and the coverage rate was set to 65%.

### [Ex. 9]

A water vapor permeable membrane module was produced in the same manner as in Ex. 4, except that: the filament diameter was 0.30 mm; and the coverage rate was set to 70%.

### [Ex. 10]

Used was a hollow fiber membrane made of a fluorine resin with an outer diameter of 1.0 mm and an inner diameter of 0.78 mm (SUNSEP membrane manufactured by AGC ENGINEERING CO., LTD.). Here, only one hollow fiber membrane was used. Covering parts formed by braiding multifilaments, each consisting of three fibers with a fiber diameter of 0.06 mm, were used. The coverage rate was set to 70%.

A water vapor permeable membrane module was produced in the same manner as in Ex. 2, except for the number of hollow fiber membranes used and the covering parts.

### [Ex. 11]

A water vapor permeable membrane module was produced in the same manner as in Ex. 10, except that: multifilaments, each consisting of 50 fibers, were used; and the coverage rate was set to 100%.

### [Ex. 12]

A water vapor permeable membrane module was produced in the same manner as in Ex. 4, except that the hollow fiber membrane was covered by no covering part.

### [Ex. 13]

Used was a hollow fiber membrane made of a fluorine resin with an outer diameter of 1.0 mm and an inner diameter of 0.78 mm (SUNSEP membrane manufactured by AGC ENGINEERING CO., LTD.). Here, only one hollow fiber membrane was used. A covering part formed by braiding monofilaments, each made of a polyphenylene sulfide resin, was used. The coverage rate was set to 45%.

### [Ex. 14]

A hollow fiber membrane was prepared in the same manner as in Ex. 13, except that the coverage rate was set to 35%.

### [Ex. 15]

A hollow fiber membrane was prepared in the same manner as in Ex. 13, except that the coverage rate was set to 5%.

### [Ex. 16]

A hollow fiber membrane was prepared in the same manner as in Ex. 13, except that the hollow fiber membrane was covered by no covering part.

### [Water Vapor Permeation Performance Evaluation]

The water vapor permeable membrane modules of Ex. 1 to 11 were each tested by supplying compressed air containing moisture equivalent to a saturated amount of water vapor at 0.7 MPaG and a temperature of 20°C from the supply portion and measuring the dew point of the compressed air discharged from the discharge port. The air flow rate ratio was set to 25%. The dew point of the compressed air was measured with a chilled mirror dew point hygrometer. The lower the dew point of the discharged compressed air, the higher the water vapor permeation performance. The result of the water vapor permeation performance evaluation of each Ex. is shown in Table 1 or Table 2.

**[Table 1]**

| | Covering part | Filament | | | Discharged compressed air |
|---|---|---|---|---|---|
| | | Fiber diameter [mm] | Monofilament/ Multifilament | Coverage rate [%] | Dew point [°C] |
| Ex. 1 | Used | 0.10 | Monofilament | 45 | -22 |
| Ex. 2 | Used | 0.06 | Multifilament (thick type) | 100 | -17 |
| Ex. 3 | Not used | - | - | 0 | -17 |

As shown in Table 1, the water vapor permeable membrane module of Ex. 1 in which the covering parts were provided in monofilament braid form to cover the hollow fiber membranes had higher water vapor permeation performance than those of the water vapor permeable membrane modules of Ex. 2 and 3.

In the water vapor permeable membrane module of Ex. 1, each of the hollow fiber membranes was covered by the covering part so that the hollow fiber membranes were spaced apart from each other and evenly arranged inside the casing. The coverage rate was in the range of 5% to 65% and was prevented from being too high, that is, an excessive decrease of the effective membrane surface area of each hollow fiber membrane was prevented. As described above, the flow rate of the purge gas flowing on the outer circumferential surface of each hollow fiber membrane was prevented from becoming excessively low. This led to an increased amount of moisture permeating from the compressed air to the outside of each hollow fiber membrane. Therefore, the water vapor permeation performance of the water vapor permeable membrane module was enhanced.

In Ex. 2 in which the coverage rate was higher than 65%, the effective membrane surface area of each hollow fiber membrane excessively decreased. This made the dry purge gas difficult to stably flow on the outer circumferential surface of each hollow fiber membrane, which led to a decreased amount of moisture permeating from the compressed air to the outside of each hollow fiber membrane. Thus, the water vapor permeable membrane module was lower in water vapor permeation performance.

In Ex. 3 in which the hollow fiber membranes were covered by no covering parts, the hollow fiber membranes were arranged biasedly in the casing and tended to come into direct contact with each other as described above. As a consequence, the flow rate of the purge gas flowing on the outer circumferential surface of each hollow fiber membrane became excessively low, which led to a decreased amount of moisture permeating from the compressed air to the outside of each hollow fiber membrane. Thus, the water vapor permeable membrane module was lower in water vapor permeation performance.

**[Table 2]**

| | Covering part | Filament | | | Discharged compressed air |
|---|---|---|---|---|---|
| | | Outer diameter [mm] | Monofilament/ Multifilament | Coverage rate [%] | Dew point [°C] |
| Ex. 4 | Used | 0.06 | Monofilament | 35 | -24 |
| Ex. 5 | Used | 0.08 | Monofilament | 40 | -24 |
| Ex. 6 | Used | 0.10 | Monofilament | 45 | -24 |
| Ex. 7 | Used | 0.17 | Monofilament | 55 | -24 |
| Ex. 8 | Used | 0.25 | Monofilament | 65 | -24 |
| Ex. 9 | Used | 0.30 | Monofilament | 70 | -23 |
| Ex. 10 | Used | 0.06 | Multifilament (thin type) | 70 | -23 |
| Ex. 11 | Used | 0.06 | Multifilament (thick type) | 100 | -20 |

As shown in Table 2, the water vapor permeable membrane modules of Ex. 4 to 8 in which: the outer diameter of the filaments was 0.01 to 0.25 times the outer diameter (1.0 mm) of the hollow fiber membrane; and the coverage rate was in the range of 5% to 65% had higher water vapor permeation performance than those of the water vapor permeable membrane modules of Ex. 9 to 11. Here, the water vapor permeable membrane modules of Ex. 4 to 8 showed the same level of water vapor permeation performance.

In the water vapor permeable membrane modules of Ex. 4 to 8, the outer diameter of the filaments 43a was prevented from being too large, so that the coverage rate did not exceed 65%. An excessive decrease of the effective membrane surface area of the hollow fiber membrane was prevented, allowing stable flow of the dry purge gas on the outer circumferential surface of the hollow fiber membrane. This led to an increased amount of moisture permeating from the compressed air to the outside of the hollow fiber membrane. The water vapor permeation performance of the water vapor permeable membrane module was therefore enhanced.

In Ex. 9 in which the outer diameter of the filaments was larger than 0.25 times the outer diameter of the hollow fiber membrane, the coverage rate exceeded 65% so that the effective membrane surface area of the hollow fiber membrane became too small. This made the dry purge gas difficult to stably flow on the outer circumferential surface of the hollow fiber membrane, which led to a decreased amount of moisture permeating from the compressed air to the outside of the hollow fiber membrane. Thus, the water vapor permeable membrane module was lower in water vapor permeation performance.

In Ex. 10 and 11 in which the covering part was provided in multifilament braid form, the coverage rate exceeded 65% so that the effective membrane surface area of the hollow fiber membrane excessively decreased. This made the dry purge gas difficult to flow on the outer circumferential surface of the hollow fiber membrane, which led to a decreased amount of moisture permeating from the compressed air to the outside of the hollow fiber membrane. The water vapor permeable membrane module was thus lower in water vapor permeation performance. In Ex. 11 in which the number of fibers constituting the filament was greater than in Ex. 10, the coverage rate was higher than in Ex. 10, and thus, the water vapor permeation performance was lower in Ex. 10.

The water vapor permeable membrane modules of Ex. 4 to 8 corresponding to Working Examples, in each of which the coverage rate was 65% or lower, showed the same level of water vapor permeation performance irrespective of the coverage rate. The inherent maximum water vapor permeation performance of the hollow fiber membranes was demonstrated without being affected by the presence of the covering part. In the water vapor permeable membrane modules of Ex. 9 to 11 corresponding to Comparative Example, by contrast, the coverage rate was higher than 65%, and the vapor permeation performance decreased as the coverage rate increased. Accordingly, the water vapor permeable membrane module is obtained in which the inherent water vapor permeability of the hollow fiber membranes can be effectively demonstrated by setting the coverage rate to be 65% or lower.

### [First Durability Performance Evaluation]

A pressure cycle test was conducted on each of the water vapor permeable membrane modules of Ex. 1, Ex. 4, Ex. 11 and Ex. 14 by immersing the water vapor permeable membrane module in hot water at 60°C and changing the pressure of the compressed gas supplied to the water vapor permeable membrane module. After that, the water vapor permeable membrane module was taken out from the hot water and dried, followed by conducting a check test to check the occurrence of damage on the hollow fiber membranes.

During the pressure cycle test, pressure swing was repeatedly performed in which the pressure of the compressed gas supplied to the water vapor permeable membrane module was increased from 0.00 MPaG to 0.85 MPaG and then decreased to 0.00 MPaG. In this pressure cycle test, the pressure swing in which the pressure of the compressed gas was increased from 0.00 MPaG to 0.85 MPaG and then decreased to 0.00 MPaG was taken as one cycle. The time required for one cycle of pressure swing was 24 seconds, and the pressure of the compressed gas was gradually changed for 24 seconds. In the pressure cycle test, each hollow fiber membrane expanded and contracted repeatedly with each cycle due to changes in the pressure of the compressed gas flowing inside each hollow fiber membrane. It is known that the hollow fiber membrane is more likely to be damaged as the amount of expansion of the hollow fiber membrane increases. In the pressure cycle test, the covering part also expanded and contracted with each cycle as the hollow fiber membrane expanded and contracted with each cycle as mentioned above.

After the completion of the pressure cycle test, the water vapor permeable membrane module was taken out from hot water and dried with the supply of dry air at an atmospheric pressure and a temperature of about 20°C. The check test was conducted every time 7200 cycles of pressure swing were performed in the pressure cycle test. In the check test, the occurrence of damage on the hollow fiber membranes was visually checked.

The result of the first durability performance evaluation of each Ex. is shown in Table 3.

**[Table 3]**

| | Covering part | Filament | | Number of pressure swing cycles | Result |
|---|---|---|---|---|---|
| | | Monofilament/ Multifilament | Coverage rate [%] | | |
| Ex. 1 | Used | Monofilament | 45 | 500,000 | No damage on hollow fiber membrane |
| Ex. 4 | Used | Monofilament | 35 | 500,000 | No damage on hollow fiber membrane |
| Ex. 11 | Used | Multifilament (thick type) | 100 | 360,000 | Damage on hollow fiber membrane |
| Ex. 12 | Not used | - | 0 | 7,200 | Damage on hollow fiber membrane |

As shown in Table 3, the water vapor permeable membrane modules of Ex. 1 and 4 had higher durability performance than those of the water vapor permeable membrane modules of Ex. 11 and 12 corresponding to Comparative Examples. In Ex. 1 and 4 in which each hollow fiber membrane was covered by the covering part at a coverage rate of from 5% to 65%, an increase of the amount of expansion of the hollow fiber membrane in the pressure cycle test was suppressed. Thus, these water vapor permeable membrane modules were enhanced in durability performance. Each of the water vapor permeable membrane module of Ex. 1 provided with 500 hollow fiber membranes and the water vapor permeable membrane module of Ex. 4 provided with one hollow fiber membrane had high durability performance. The water vapor permeable membrane modules of these Working Examples achieved high durability performance irrespective of the number of hollow fiber membranes used.

When expansion and contraction of the hollow fiber membrane are repeated in the pressure cycle test, the fibers constituting the covering part may break by rubbing against each other. Rubbing between the fibers is more likely to occur as the coverage rate increases. Hence, such fiber breakage is more likely to occur when the coverage rate is set too high. For these reasons, in Ex. 11 in which the covering part was provided at a coverage rate of higher than 65%, fiber breakage was likely to occur in the pressure cycle test to cause a decrease of the strength of the covering part. This led to an increase in the amount of expansion of the hollow fiber membrane in the pressure cycle test so that the hollow fiber membrane was prone to breakage. Thus, the water vapor permeable membrane module was lower in durability performance.

In Ex. 12 in which the hollow fiber membrane was covered by no covering part, the hollow fiber membrane was likely to undergo a large amount of expansion and thus was prone to damage. Hence, the water vapor permeable membrane module was lower in durability performance.

### [Second Durability Performance Evaluation]

Each of the hollow fiber membranes of Ex. 13 to16 was tested by, while immersing the hollow fiber membrane in hot water at 90°C, increasing the pressure of water supplied to the inside of the hollow fiber membrane and measuring the water pressure at which the hollow fiber membrane ruptured as the burst pressure. In this second durability performance evaluation, the pressure of water supplied to the inside of the hollow fiber membrane was increased up to 5.0 MPaG. In the second durability performance evaluation, the lower the strength of the covering part, the larger the amount of expansion of the hollow fiber membrane under the pressure of water supplied, the lower the burst pressure.

The result of the second durability performance evaluation of each Ex. is shown in Table 4.

**[Table 4]**

| | Covering part | Filament | | Burst pressure [MPaG] |
|---|---|---|---|---|
| | | Monofilament/ Multifilament | Coverage rate [%] | |
| Ex. 13 | Used | Monofilament | 45 | 5.0< |
| Ex. 14 | Used | Monofilament | 35 | 5.0< |
| Ex. 15 | Used | Monofilament | 5 | 5.0 |
| Ex. 16 | Not used | - | 0 | 0.8 |

As shown in Table 4, the hollow fiber membranes of Ex. 13 to 15 in which the coverage rate was 5% or higher had higher durability performance than that of the hollow fiber membrane of Ex. 16. The hollow fiber membranes of Ex. 13 and 14 did not rupture even when the water pressure was increased to 5.0 MPaG. The hollow fiber membrane of Ex. 15 ruptured when the water pressure was increased to 5.0 MPaG.

As described above, in the hollow fiber membranes of Ex. 13 to 15, the coverage rate was prevented from being too low, and the area of the openings was prevented from being too large. An excessive decrease of the strength of the covering part was suppressed to suppress an increase in the amount of expansion of the hollow fiber membrane and thereby suppress rupture of the hollow fiber membrane. Thus, the hollow fiber membrane was enhanced in durability performance.

In Ex. 16 in which the hollow fiber membrane was covered by no covering part, the hollow fiber membrane was likely to undergo a large amount of expansion under the water pressure and thus was prone to rupture. Hence, the water vapor permeable membrane module was lower in durability performance.

Although the embodiment of the present invention has been described above, the features and combinations of the features as illustrated in the above-described embodiment are exemplary; and additions, omissions, substitutions and other modifications of the features are possible within the range that does not depart from the concept of the present invention. The present invention is by no means restricted to the above-described embodiment.

The water vapor permeable membrane module may be provided with no branch pipe. This simplifies the configuration of the water vapor permeable membrane module and increases the flow rate of gas fed to the equipment. In such a case, a purge gas feeding device may be provided inside the casing to generate purge gas and feed the generated gas to the inside of the casing.

The water vapor permeable membrane module may be configured to discharge wet gas by supplying moisture to dry gas flowing inside the hollow fiber membranes. In this case, wet purge gas is fed into the casing such that moisture in the purge gas permeates into the hollow fiber membranes and is supplied to the gas.

The entire disclosure of Japanese Patent Application No. 2023-136424 filed on August 24, 2023, including specification, claims, drawings and summary, is incorporated herein by reference in its entirety.

### REFERENCE SYMBOLS

10: Water vapor permeable membrane module
20: Casing
38: Sealant
40: Hollow fiber membrane bundle
42: Hollow fiber membrane
43: Covering part
43a: Filament
Gp: Purge gas
PA1, PA2: Compressed gas

## Claims

1. A water vapor permeable membrane module comprising a hollow fiber membrane bundle having:
a plurality of hollow fiber membranes extending in an axial direction; and
covering parts each formed by braiding a plurality of filaments such that the plurality of hollow fiber membranes are covered by the covering parts, respectively,
a ratio of an area of a portion of an outer circumferential surface of the hollow fiber membrane covered by the covering part to an area of the outer circumferential surface of the hollow fiber membrane ranging from 5% to 65%.

2. The water vapor permeable membrane module according to Claim 1, wherein the filaments are monofilaments.

3. The water vapor permeable membrane module according to Claim 1, wherein an outer diameter of the filaments is from 0.01 to 0.25 times an outer diameter of the hollow fiber membrane.

4. The water vapor permeable membrane module according to any one of Claims 1 to 3, wherein the filaments are made of at least one resin selected from the group consisting of polyphenylene sulfide, polyacrylonitrile, polypropylene, polyvinylidene fluoride, polyarylate, perfluoroalkoxyalkane, polytetrafluoroethylene, polyether ether ketone, polybenzimidazole, polysulfone, polyphenylsulfone, polyethersulfone, polyimide, polyetherimide, polyamide, and polyamide-imide.

5. The water vapor permeable membrane module according to any one of Claims 1 to 3, comprising:
a tubular casing extending in the axial direction and having both axial ends open; and
a sealant made of a resin, wherein:
the hollow fiber membrane bundle is packed in the casing; and
the sealant seals spaces between the plurality of hollow fiber membranes and between the hollow fiber membrane bundle and the casing.

6. The water vapor permeable membrane module according to Claim 5, which is configured to allow purge gas to flow inside the casing,
wherein the purge gas is a part of gas discharged from the hollow fiber membrane bundle.
